# EUROPÄISCHE PATENTSCHRIFT

(11) **EP 3 716 451 B1**
(45) Veröffentlichungstag und Bekanntmachung des Hinweises auf die Patenterteilung: **15.06.2022**
(21) Anmeldenummer: 20175213.6
(22) Anmeldetag: 07.08.2015
(51) Int. Cl.: H02K 7/18, H02K 7/06, H04W 52/02

(54) **KOMMUNIKATIONSEINRICHTUNG**
COMMUNICATION DEVICE
DISPOSITIF DE COMMUNICATION

(30) Priorität: 15.10.2014 DE 102014220847
(43) Veröffentlichungstag der Anmeldung: 30.09.2020
(62) Teilanmeldung aus: 15748235.7
(73) Patentinhaber: Würth Elektronik eiSos GmbH & Co. KG, 74638 Waldenburg (DE)
(72) Erfinder: Petrovic, Tomislav, 18000 Nis (RS); Dinulovic, Dragan, 81735 München (DE)
(74) Vertreter: Patentanwälte Ruff, Wilhelm, Beier, Dauster & Partner mbB

(56) Entgegenhaltungen:
- DE-A1- 10 046 593
- DE-U1- 29 918 342
- GB-A- 110 700
- US-A- 5 844 516

## Beschreibung

Die Erfindung betrifft eine Kommunikationseinrichtung.

Aus der deutschen Offenlegungsschrift DE 10046593 A1 ist eine Kommunikationsanordnung zur Anbringung an einem mobilen Gerät bekannt, die Messdaten mithilfe eines Senders überträgt. Die Anordnung enthält einen Energiespeicher in Form einer Batterie. Zum Aufladen der Batterie dient ein Energiewandler mit einem Windrad und einem Generator.

Aus der deutschen Offenlegungsschrift DE 102009041023A1 ist ein elektrodynamischer Energiewandler bekannt, der einen in einem Gehäuse federnd gelagerten Schwinger mit Dauermagneten enthält, der sich gegenüber einer Spule bewegt. Dieser Energiewandler bezieht seine mechanische Energie aus Schwingungen.

Die Patentschrift US 5,844,516 A beschreibt eine drahtlose Fernbedienung mit einem Bewegungsmodul in Form eines Drucktasters, einem Wandlermodul in Form eines Generators, einem Energiemanagementmodul in Form eines Spannungsreglers und einem Sendemodul, das Radio- oder Ultraschallwellen aussendet. Das Wandlermodul wandelt die von dem Bewegungsmodul bereitgestellte mechanische Energie in elektrische Energie zum Aussenden eines Signals des Sendemoduls.

Die Patentschrift GB 110 700 A beschreibt eine Taschenlampe mit einem Bewegungsmodul, einem Wandlermodul, einem Energiemanagementmodul und einem Sendemodul. Über ein Bewegungsmodul in Form einer Drucktaste wird über ein Wandlermodul in Form eines Dynamos mechanische Energie in elektrische Energie umgewandelt und ein Sendemodul in Form einer Lichtquelle betrieben.

Aus der deutschen Gebrauchsmusterschrift DE 299 183 42 U1 ist ein Ladegerät für ein Mobiltelefon bekannt. Das Ladegerät weist eine Einrichtung zur mechanischen Erzeugung einer Rotationsbewegung auf, eine Einrichtung, um die Rotationsbewegung in elektrische Energie umzuwandeln. Eine Rotationsbewegung wird mittels eines Handhebels erzeugt, der auf ein Gehäuse zu und von dem Gehäuse weg bewegt werden kann. Mit dem Handhebel ist eine Zahnstange verbunden, die mit einem Zahnrad innerhalb des Gehäuses in Eingriff steht. Das Zahnrad innerhalb des Gehäuses steht mit einem Generator im Gehäuse in Verbindung. Weiter ist ein Freilaufelement vorgesehen, welches nur eine Richtung der Hebelbewegung des Handhebels zur Drehachse überträgt.

Der Erfindung liegt die Aufgabe zu Grunde, eine drahtlos arbeitende Kommunikationseinrichtung und ein Energieversorgungsmodul zu schaffen, die sich mit geringem Aufwand an unterschiedlichste Anwendungsfälle und Umgebungen anpassen lassen.

Zur Lösung dieser Aufgabe schlägt die Erfindung eine Kommunikationseinrichtung mit den im Anspruch 1 genannten Merkmalen vor. Weiterbildungen der Erfindung sind Gegenstand von Unteransprüchen.

Erfindungsgemäß ist eine Kommunikationseinrichtung aufgebaut aus mindestens vier Bestandteilen, die modulartig zusammengesetzt werden. Ein erstes Modul wandelt Bewegungsenergie in elektrische Energie um und wird als Wandlermodul bezeichnet. Ein zweites Modul ist ein Energiemanagementmodul, das die vom Wandlermodul bereitgestellte elektrische Energie beispielsweise speichert, transformiert und/oder umsetzt, um elektrische Energie gemäß vorgegebener Randbedingungen bereitstellen zu können. Ein drittes Modul ist ein Sendemodul, das die elektrische Energie zum eigenen Betrieb verwendet und ein Kommunikationssignal aussendet, beispielsweise ein Messwertsignal. Ein viertes Modul erzeugt mechanisch eine Rotationsbewegung und wird als Bewegungsmodul bezeichnet. Erfindungsgemäß weist das Bewegungsmodul eine Antriebsstange und wenigstens ein Zahnrad auf, das an der Antriebsstange angreift und bei einer linearen Bewegung der Antriebsstange in Rotationsbewegung versetzt wird. Durch den modularen Aufbau aus vier Bestandteilen, die jeweils einzeln ausgetauscht werden können, ist es möglich, je nach Anwendungsfall ein speziell für diesen Anwendungsfall geeignetes Modul auszuwählen und in der Kommunikationseinrichtung zu verwenden.

Es ist die Möglichkeit vorgesehen, dass die Module der Kommunikationseinrichtung einzeln gegen Module anderer Charakteristik, vorzugsweise aber gleicher Baugröße oder kompatibler Baugröße, ausgetauscht werden können.

Es kann vorgesehen sein, dass bei der von der Erfindung vorgeschlagenen Kommunikationseinrichtung mindestens ein vorzugsweise mechanisch in sich abgeschlossenes Modul aus einer Vielzahl von Modulen gleicher Funktionalität und gleicher oder kompatibler Baugröße ausgewählt ist.

Es kann vorgesehen sein, dass mindestens ein Modul als mechanisch getrenntes Bauelement verwirklicht ist, das derart ausgebildet ist, dass es mit dem zugeordneten benachbarten Modul mechanisch und funktionell gekoppelt werden kann.

Je nach den verwendeten Komponenten kann vorgesehen sein, dass das Energiemanagementmodul oder das Sendemodul eine Leistungsanpassung aufweist. Diese Leistungsanpassung soll dazu dienen, die von dem Energiewandler gelieferte elektrische Energie an die Erfordernisse der Elektronik des Sendemoduls und gegebenenfalls auch an die Erfordernisse eines aktiven Sensors anzupassen.

Kommunikationseinrichtungen der hier betrachteten Art können als Übertrager von Messwerten eingesetzt werden. Falls der zu messende Wert nicht direkt die Rotationsbewegung erzeugt, kann daher in Weiterbildung das Sendemodul eine Anschlussmöglichkeit für einen Messwertsensor aufweisen. Sinnvollerweise ist dann die Leistungsanpassung auch für diesen Sensor zuständig, falls es sich um einen Sensor handelt, der zu seinem Betrieb auch elektrische Leistung benötigt.

Gemäß einer ersten Alternative der Erfindung ist die Antriebsstange wenigstens abschnittsweise als Schneckenwelle ausgebildet.

Mittels einer Schneckenwelle lässt sich eine zuverlässige Kraftübertragung auf das Zahnrad erreichen. Das Schneckengetriebe, das durch die Schneckenwelle und das insbesondere als Schneckenrad ausgebildete Zahnrad gebildet wird, wird mittels einer geradlinigen Antriebsbewegung der Schnecke betrieben. Die Antriebsstange wird also linear bewegt und die Schneckenwelle versetzt durch ihre translatorische Bewegung das Zahnrad in Drehung. Alternativ ist selbstverständlich auch eine Drehung der Antriebsstange um ihre Längsachse möglich. Falls benötigt, können durch das Schneckengetriebe also zwei unterschiedliche Übersetzungen realisiert werden, einmal durch Drehung der Antriebsstange mit einer daraus folgenden langsamen Drehung des Zahnrads und einmal durch eine geradlinige translatorische Bewegung der Antriebsstange mit einer daraus folgenden schnelleren Drehung des Zahnrads. Schneckenwellen und Schneckenräder sind als Standardteile verfügbar und lassen sich beispielsweise durch spanende Bearbeitung fertigen.

Gemäß einer zweiten Alternative der Erfindung ist die Antriebsstange wenigstens abschnittsweise mit einem Schraubengewinde versehen. Das Zahnrad kann in einem solchen Fall entweder mit Geradverzahnung oder mit Schrägverzahnung ausgeführt werden. Als kinematische Paarung haben eine Schraube mit einem Schraubengewinde und ein Zahnrad mit Schrägverzahnung bessere Eigenschaften als die Paarung aus einem Schraubengewinde und einem Zahnrad mit Geradverzahnung. Die Fertigung eines Zahnrads mit Geradverzahnung ist aber wesentlich kostengünstiger, beispielsweise mittels Spritzguss oder Sintertechnik. Eine Kopplung zwischen dem Schraubengewinde und dem Zahnrad, auch mit Geradverzahnung, lässt sich aber anpassen, so dass sich ein zufriedenstellendes Zusammenwirken von Schraubengewinde und Zahnrad, auch wenn das Zahnrad eine Geradverzahnung hat, realisieren lässt. Schraubengewinde lassen sich sehr kostengünstig herstellen und sind ohnehin als Standardteile verfügbar.

In weiterer Ausgestaltung der Erfindung kann eine Feder vorgesehen sein, um die Drucktaste und/oder die Antriebsstange in eine Ausgangsposition vorzuspannen. Mit einer solchen Drucktaste können beispielsweise Änderungen des Zustands von Einrichtungen überprüft werden, beispielsweise das Öffnen oder Schließen einer Klappe. Die Energie der Feder kann ebenfalls zur Erzeugung einer Rotationsbewegung des Zahnrades genutzt werden, indem die Feder nach dem Betätigen der Drucktaste die Antriebstange in die Ausgangsstellung zurückdrückt.

In Weiterbildung kann die Einrichtung zur Erzeugung einer Rotationsbewegung auch ein Getriebe mit einer Übersetzung oder auch einer Untersetzung aufweisen.

Insbesondere bei einer Drucktaste zur Erzeugung der Rotationsbewegung kann vorgesehen sein, dass diese Einrichtung einen Freilauf mit einer Rücklaufsperre aufweist, damit durch mehrfaches Betätigen der Drucktaste eine länger dauernde Rotationsbewegung erzeugt werden kann.

Es kann vorgesehen sein, dass das Wandlermodul einen Rotor mit mindestens einem Permanentmagneten und einen von dem Rotor durch einen Luftspalt getrennten Stator mit mindestens einer Spule aufweist.

Durch die Zahl und Ausbildung der Permanentmagnete und die Zahl und Ausbildung der Spulen kann die elektrische Leistung in weiten Grenzen verändert werden, die von dem Wandlermodul geliefert wird.

Beispielsweise kann der Rotor abwechselnd gepolte Permanentmagnete aufweisen, und die Zahl und Größe der Spulen des Stators kann der Zahl und Größe der Permanentmagnete gleich sein.

Die mindestens eine Spule kann auf eine Leiterplatte aufgebracht sein. Die Leiterplatte kann mit einem Steckplatz für das Energiemanagementmodul und/oder das Sendemodul versehen sein. Es kann vorgesehen sein, dass das Bauteil, das mechanisch in Rotationsbewegung versetzt wird, der Rotor des Wandlermoduls ist.

Das Energiemanagementmodul kann eine Leiterplatte aufweisen, auf der das Wandlermodul angeordnet ist und die einen Steckplatz für das Sendemodul aufweist.

Eine Kommunikationseinrichtung, wie sie hierin beschrieben wurde, kann als Signalgeber verwendet werden. Damit stellt die Betätigung beispielsweise der Drucktaste bereits das Signal dar, das drahtlos übertragen werden soll. Auch bei der Erzeugung der Drehbewegung durch eine Turbine oder ein Windrad kann die Rotation selbst das Signal sein, beispielsweise, wenn das Vorhandensein einer Strömungsbewegung abgefragt werden soll.

Eine Kommunikationseinrichtung, wie sie hierin beschrieben wurde, kann zur Übertragung von Sensormesswerten verwendet werden. In diesem Fall dient die Rotationsbewegung, die mechanisch erzeugt wird, nur zur Leistungsversorgung des Sendemoduls und gegebenenfalls des Sensors.

Es ist weiterhin ein Energieversorgungsmodul (nicht Teil der Erfindung) für eine Kommunikationseinrichtung vorgeschlagen, die eine als Bewegungsmodul ausgebildete Einrichtung zur mechanischen Erzeugung einer Rotationsbewegung und ein Wandlermodul zur Umwandlung der Rotationsenergie der Rotationsbewegung in elektrische Energie enthält.

Das Wandlermodul kann einen Rotor mit mindestens einem Permanentmagneten und einem von dem Rotor durch einen Luftspalt getrennten Stator mit mindestens einer Spule, vorzugsweise einer Vielzahl von Spulen, aufweisen.

Aufgrund des modularen Aufbaus und des vorgeschlagenen Wandlermoduls das hohe Energiedichten ermöglicht, hat die Kommunikationseinrichtung große und vielfältige Anwendungsbereiche.

Weitere Merkmale, Einzelheiten und Vorzüge der Erfindung ergeben sich aus den Ansprüchen, der folgenden Beschreibung bevorzugter Ausführungsformen der

Erfindung sowie anhand der Zeichnung. Einzelmerkmale der unterschiedlichen dargestellten Ausführungsformen lassen sich dabei in beliebiger Weise im Rahmen der durch Anspruch 1 definierten Erfindung kombinieren.

Hierbei zeigen:
- Figur 1: schematisch eine Einrichtung zur Erzeugung einer Rotationsbewegung mithilfe einer Drucktaste;
- Figur 2: eine der Figur 1 entsprechende Darstellung mit einem Übersetzungsgetriebe;
- Figur 3: ebenfalls schematisch eine Einrichtung zur Erzeugung einer Rotationsbewegung mithilfe eines Kurbelantriebs,
- Figur 4: die geometrische Form einer Kommunikationseinrichtung;
- Figur 5: schematisch den Aufbau einer Kommunikationseinrichtung aus den drei Modulen;
- Figur 6: die Stirnansicht des Rotors eines Wandlermoduls der Kommunikationseinrichtung nach der Erfindung;
- Figur 7: die Stirnansicht des Stators des Wandlermoduls;
- Figur 8: eine vereinfachte Seitenansicht des Wandlermoduls der Kommunikationseinrichtung der Erfindung;
- Figur 9: eine den Figuren 1 - 3 entsprechende Darstellung eines nicht erfindungsgemäßen Moduls zur Erzeugung einer Rotationsbewegung;
- Figur 10: eine schematische, auseinandergezogene Darstellung einer erfindungsgemäßen Kommunikationseinrichtung gemäß einer weiteren Ausführungsform,
- Figur 11: eine Ansicht der Kommunikationseinrichtung der Figur 10 von schräg oben,
- Figur 12: eine schematische Seitenansicht einer erfindungsgemäßen Kommunikationseinrichtung gemäß einer weiteren Ausführungsform,
- Figur 13: die Kommunikationseinrichtung der Figur 12 von schräg oben,
- Figur 14: ein Wandlermodul für eine erfindungsgemäße Kommunikationseinrichtung gemäß einer weiteren Ausführungsform der Erfindung,
- Figur 15: ein Bewegungsmodul für eine Kommunikationseinrichtung gemäß einer weiteren Ausführungsform der Erfindung und
- Figur 16: ein Bewegungsmodul für eine Kommunikationseinrichtung gemäß einer weiteren Ausführungsform der Erfindung.

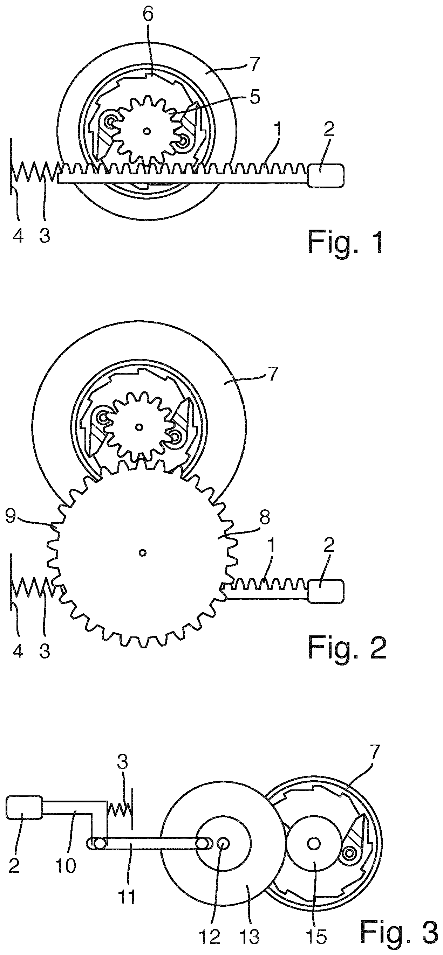

Die Figur 1 beschreibt schematisch die Einrichtung zur Erzeugung einer Rotationsbewegung. Die Einrichtung enthält eine Zahnstange 1, die in dem Modul verschiebbar gelagert ist. Die Zahnstange 1 enthält an ihrem freien Ende eine Drucktaste 2. Sie wird in die dargestellte Position durch eine Druckfeder 3 bewegt, die sich an einer Gehäusewand 4 abstützt. Die Zahnstange 1 steht mit ihrer Zahnreihe mit einem Zahnrad 5 in Eingriff. Das Zahnrad 5 ist über einen angedeuteten Freilauf 6 mit einer Scheibe 7 verbunden. Beim Verschieben der Zahnstange 1 mithilfe der Drucktaste 2, in Figur 1 nach links, wird über das Zahnrad 5 die Scheibe 7 in Rotation versetzt. Lässt man die Drucktaste 2 los, kehrt die Zahnstange 1 in die dargestellte Position zurück. Dabei wird mithilfe des Freilaufs die Scheibe 7 von der Zahnstange 1 entkoppelt. Man kann auf diese Weise durch mehrfaches Drücken eine länger dauernde Rotationsbewegung der Scheibe 7 erzeugen.

Bei der in Figur 2 dargestellten Ausführungsform steht die Zahnstange 1 mit einem Zahnrad 8 in Eingriff, das drehfest mit einem größeren Zahnrad 9 verbunden ist. Dieses größere Zahnrad 9 steht dann in Eingriff mit dem Zahnrad 5 der vorhergehenden Ausführungsform. Durch die Zwischenschaltung der beiden Zahnräder 8, 9 wird ein Übersetzungsgetriebe gebildet, so dass die Scheibe 7 bei gleichem Hub der Zahnstange 1 in schnellere Drehung versetzt wird.

Bei der in Figur 3 dargestellten Ausführungsform ist wieder eine Drucktaste 2 vorgesehen, die in dem Modul verschiebbar geführt ist und die mithilfe einer Druckfeder 3 in eine Ausgangsposition versetzt wird. Das abgewinkelte Ende der Stange 10, die die Drucktaste 2 aufweist, steht über eine Pleuelstange 11 mit einem Rad 12 in Verbindung, wobei die Pleuelstange 11 exzentrisch an dem Rad 12 angelenkt ist. Das Rad 12 ist drehfest mit einem größeren Rad 13 verbunden, dessen Umfang mit einem dem Zahnrad 5 entsprechenden Rad 15 in Eingriff steht. Im dargestellten Beispiel handelt es sich um einen Reibeingriff zwischen den Rädern 13 und 15. Im übrigen führt die Rotation des Rads 15 über einen Freilauf wieder zu einer Rotation der Scheibe 7. Die in Figur 3 dargestellte Ausführungsform stellt also einen Kurbelantrieb für die Scheibe 7 dar.

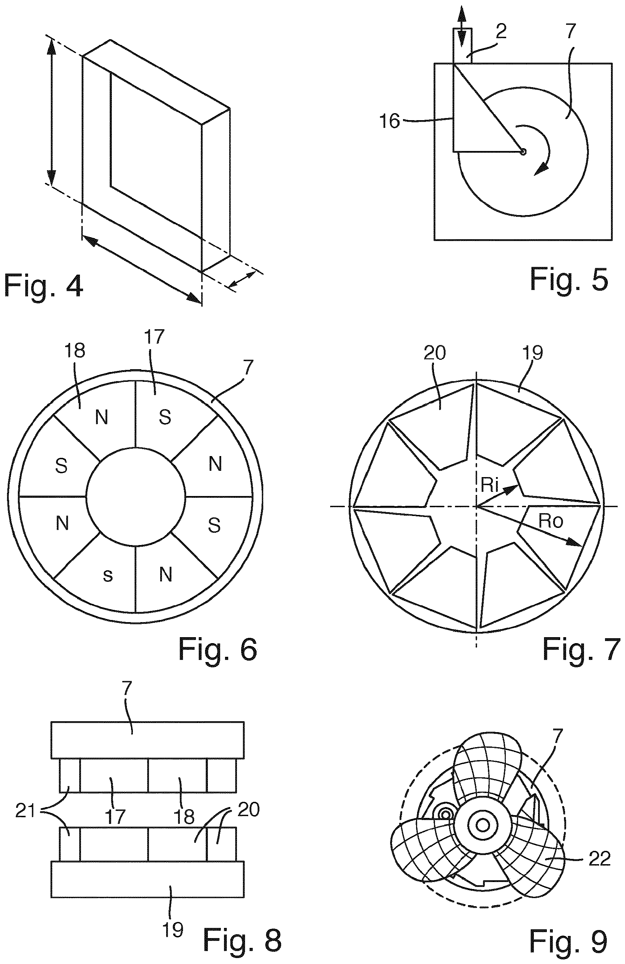

Die Figur 4 zeigt schematisch die Größe und die geometrische Form der Kommunikationseinrichtung nach einem Ausführungsbeispiel der Erfindung an. Die aus den drei Teilen bestehende Kommunikationseinrichtung soll in einem Quader untergebracht werden, wie er in Figur 4 angedeutet ist. Die Dicke des Quaders soll im Bereich von etwa 10 - 20 mm liegen, während die Kantenlängen der beiden anderen Dimensionen etwa im Bereich von 50 mm liegen sollen.

Figur 5 zeigt nun eine Seitenansicht einer solchen Kommunikationseinrichtung. Aus einer Seite des Quaders ragt die Drucktaste 2 heraus. Der Hub der Taste beträgt etwa 2 - 10 mm. Die Taste 2 setzt über eine Mechanik 16 die Scheibe 7 in Rotation.

Die Figur 6 zeigt nun in einer Stirnansicht einen Teil des Wandlermoduls, also des Moduls, das die von dem ersten Modul erzeugte Rotationsbewegung der Scheibe 7 in elektrische Energie umwandelt. Es handelt sich bei der Figur 6 um den Rotor. Die Scheibe 7 bildet das Joch des Rotors des Wandlermoduls. Sie besteht aus weichmagnetischem Material. Auf ihr sind Permanentmagnete 17,18 befestigt, deren Pole abwechselnd unterschiedlich gerichtet sind. Im dargestellten Beispiel handelt es sich um acht Permanentmagnete. Sie haben in der Draufsicht der Figur 6 Kreissektorform.

Das Wandlermodul enthält einen mit dem Rotor der Figur 6 zusammenwirkenden Stator, der in einer Stirnansicht in Figur 7 dargestellt ist. Der Stator enthält auf einem Joch 19 aus weichmagnetischem Material acht Spulen 20, die jeweils um einen Kern aus magnetischem Material herumgewickelt sind. Die Zahl und Größe der Spulen 20 entspricht der Zahl und Größe der Permanentmagnete 17,18, die auf dem Stator 7 angebracht sind.

Die Figur 8 zeigt eine Seitenansicht der Anordnung aus dem Rotor der Figur 6 und dem Stator der Figur 7. Die in Figur 6 und Figur 7 zu sehenden Seiten liegen einander gegenüber, und zwischen beiden Teilen ist ein Luftspalt 21 gebildet.

Die von dem Wandlermodul gelieferte Spannung hängt von der Rotationsgeschwindigkeit, der Zahl der Permanentmagnete und Spulen, der Zahl der Wicklungen der Spulen, dem verwendeten Material, der Größe des Luftspalts und natürlich der Gesamtgröße der Anordnung ab.

Die Figur 9 zeigt nun ein weiteres nicht erfindungsgemäßes Beispiel für die Erzeugung der Rotationsbewegung. Hier ist mit dem Rotor 7 ein Windrad 22 verbunden, im dargestellten Beispiel ein dreiflügliges Windrad. Dieses Windrad 22 dient als Beispiel für eine Turbine.

Selbstverständlich sind auch andere Formen von Turbinen und Windrädern möglich. Diese Art der Erzeugung der Rotationsbewegung eignet sich beispielsweise für Umgebungen, in denen ständig Wind herrscht.

Eine Anordnung, wie sie in Figur 9 dargestellt ist, kann aber auch dazu dienen, das Vorhandensein einer Luftströmung oder einer Flüssigkeitsströmung anzuzeigen.

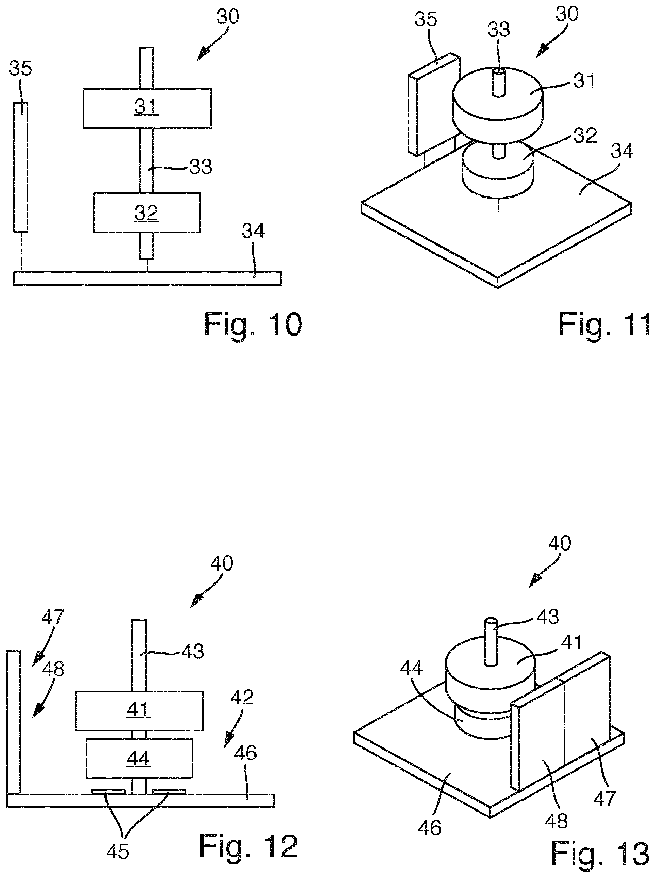

Die Darstellung der Figur 10 zeigt schematisch eine erfindungsgemäße Kommunikationseinrichtung 30, die ein Bewegungsmodul 31 und ein Wandlermodul 32 aufweist, wobei das Bewegungsmodul 31 und das Wandlermodul 32 auf einer gemeinsamen Achse 33 angeordnet sind. Mit dem Bewegungsmodul 31 wird eine Rotationsbewegung um die Achse 33 erzeugt, die dann von dem Wandlermodul 32 in elektrische Energie umgesetzt wird. Die Achse 33 ist dafür vorgesehen, auf eine Leiterplatte eines Leistungsmanagementmoduls 34 aufgesetzt zu werden. In der Darstellung der Figur 10 ist die Achse 33 von dem Leistungsmanagementmodul 34 abgehoben dargestellt und eine gestrichelte Linie soll die vorgesehene Verbindung von Achse 33 und Leistungsmanagementmodul 34 andeuten.

In dem Leistungsmanagementmodul 34 wird die von dem Wandlermodul 32 gelieferte elektrische Energie gemäß vorgegebener Randbedingungen umgesetzt. Die vom Wandlermodul 32 gelieferte elektrische Spannung wird in den Energiemanagementmodul 34 beispielsweise hochgesetzt und geregelt. Vom Wandlermodul 32 wird eine Wechselspannung geliefert, die mittels eines sich drehenden Rotors mit Permanentmagneten und gegenüber den sich drehenden Permanentmagneten stillstehenden Spulen induziert wird. Diese Wechselspannung wird in den Energiemanagementmodul 34 zuerst mittels eines Transformators auf einen Wert von einigen Volt hochgesetzt. Danach wird die Spannung gleichgerichtet und mittels eines DC-DC-Konverters auf einen gewünschten Wert geregelt. Die vom Wandlermodul 32 gelieferte Wechselspannung kann beispielsweise um einen Faktor 100 hochgesetzt werden. Als Ausgangsspannung des Energiemanagementmoduls 34 wird eine geregelte Gleichspannung mit einem Wert von beispielsweise 1,8 Volt oder 3,3 Volt geliefert, die dann einem Sendemodul 35 bereitgestellt wird.

Das Sendemodul 35 kann dann eine Information, beispielsweise ein Messwertsignal, funken. Das Signal kann dann beispielsweise an eine zentrale Station oder an eine geeignete Steuerung, beispielsweise eine Motorsteuerung, gesendet werden. Das Sendemodul 35 ist dafür vorgesehen, in einen in Figur 10 nicht dargestellten Steckplatz auf der Leiterplatte des Energiemanagementmoduls 34 eingesteckt zu werden. Dies ist mittels einer gestrichelten Linie zwischen dem Sendemodul 35 und dem Energiemanagementmodul 34 in Figur 10 angedeutet. Figur 11 zeigt eine Ansicht der Kommunikationseinrichtung 30 der Figur 10 von schräg oben. Zu erkennen ist der kompakte Aufbau der Kommunikationseinrichtung 30. Ein erheblicher Vorteil des modularen Aufbaus liegt darin, dass die einzelnen Module 31, 31, 34 und 35 nicht nur gegen Module mit anderen Eigenschaften ausgewechselt werden können, sondern dass vor allem marktübliche Module verwendet werden können. Beispielsweise kann als Energiemanagementmodul 34 ein marktfertiges System verwendet werden, beispielsweise MSP430 von Texas Instruments, LTC31xx oder LTC35XX von Linear Technology. Auch als Sendemodul können am Markt verfügbare Systeme verwendet werden, beispielsweise Semtech SX1230 oder Sendemodule ZIGBEE. Die Sendemodule können beispielsweise Signale mit einer Frequenz von 315MHz, 434MHz, 868MHz oder 915MHz senden. Die Reichweite solcher Systeme liegt typischerweise bei bis zu 100 m. Das übertragene Signal kann entweder eine Aussage über die am Bewegungsmodul 31 erzeugte Bewegungsenergie sein, beispielsweise wenn das Bewegungsmodul 31 eine Turbine aufweist und eine Aussage über eine Strömungsgeschwindigkeit gemacht werden soll. An das Sendemodul 35 oder an das Energiemanagementmodul 34 kann aber auch ein Sensor angeschlossen sein, dessen Signal dann mittels dem Sendemodul 35 übertragen wird.

Die Darstellung der Figur 12 zeigt eine weitere Kommunikationseinrichtung 40 gemäß der Erfindung in einer schematischen Seitenansicht. Ein Bewegungsmodul 41 und ein Wandlermodul 42 sind auf einer gemeinsamen Achse 43 angeordnet. Das Bewegungsmodul 41 erzeugt eine Rotationsenergie, die dann von dem Wandlermodul 42 in elektrische Energie umgesetzt wird. Das Wandlermodul 42 weist bei der dargestellten Ausführungsform einen Rotor 44 auf, der sich auf der Achse 43 dreht und mehrere Permanentmagnete aufweist. Durch die Drehung des Rotors 44 wird in Spulen 45 eine elektrische Spannung induziert. Die Spulen 45 sind auf einer Leiterplatte 46 vorgesehen und auf diese Leiterplatte 46 beispielsweise aufgedruckt. Die in den Spule 45 induzierte Spannung wird dann über Leiterbahnen auf der Leiterplatte 46 zu einem Leistungs- oder Energiemanagementmodul 47 übertragen. Das Energiemanagementmodul 47 stellt unter Berücksichtigung von vorgegebenen Randbedingungen dann einem Sendemodul 48 eine geeignete elektrische Energieversorgung zur Verfügung.

In der Darstellung der Figur 13 ist zu erkennen, dass das Energiemanagementmodul 47 und das Sendemodul 48 in nicht dargestellte Steckverbinder auf der Leiterplatte 46 eingesteckt sind. Dadurch kann das Energiemanagementmodul 47 einfach angesteckt werden und zusätzliche Anschlussdrähte sind nicht erforderlich, da die Übertragung der elektrischen Energie mittels Leiterbahnen auf der Leiterplatte 46 erfolgt. Das Sendemodul 48 wird in gleicher Weise angesteckt, wobei das Sendemodul 48 entweder an das Energiemanagementmodul 47 angesteckt werden kann oder ebenfalls in eine geeignet Steckverbindung auf der Leiterplatte 46, wobei über eine Steckverbindung auf der Leiterplatte 46 dann das Energiemanagementmodul 47 die für den Betrieb des Sendemoduls 48 benötigte elektrische Energie zur Verfügung stellt. Auf der Leiterplatte 46 sind, wie erwähnt wurde, nicht nur die Spulen 45 aufgedruckt sondern auch die vollständige Verschaltung dieser Spulen 45. Der Aufbau der erfindungsgemäßen Kommunikationseinrichtung 40 wird dadurch erheblich vereinfacht und, falls erforderlich, können einzelne Module in einfacher Weise gegen solche mit anderen Eigenschaften ausgetauscht werden.

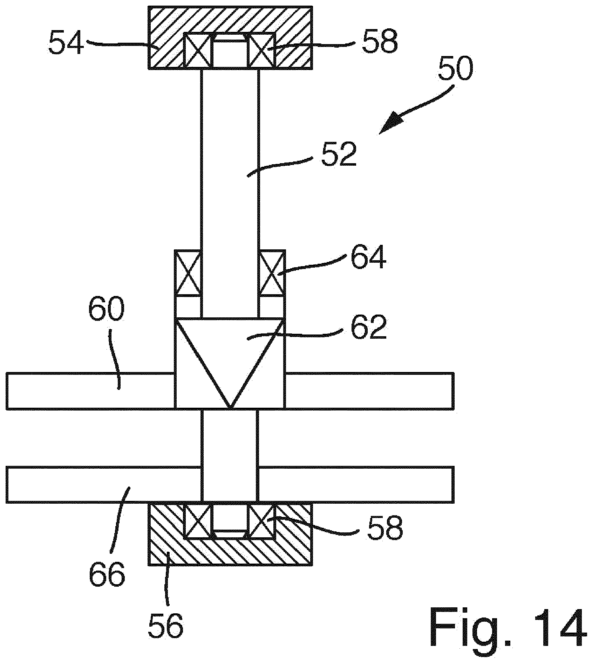

Die Darstellung der Fig. 14 zeigt schematisch ein Wandlermodul 50 für eine Kommunikationseinrichtung gemäß einer weiteren Ausführungsform der Erfindung. Das Wandlermodul 50 weist eine Welle 52 auf, die in gegenüberliegenden Gehäusewänden 54, 56 jeweils in Kugellagern 58 gelagert ist. Eine Drehbewegung der Welle wird dadurch erleichtert und Reibung wird vermindert. Der Wirkungsgrad des Wandlermoduls 50 wird dadurch erhöht.

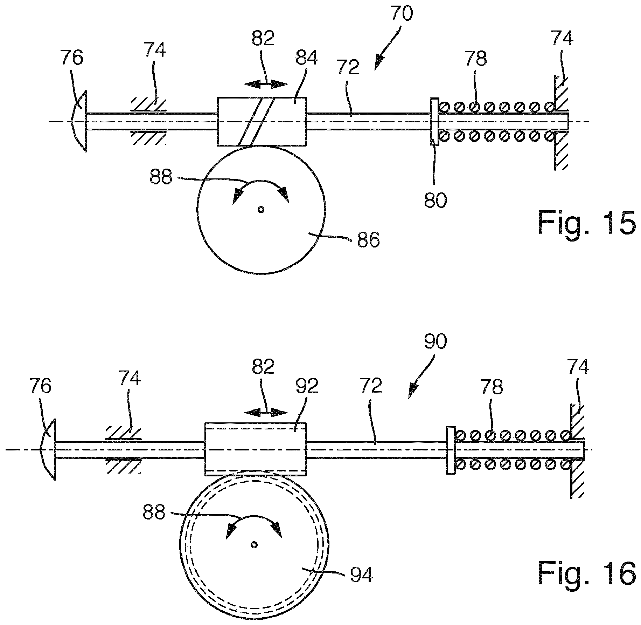

Auf der Welle 52 ist ein scheibenförmiger Rotor 60 mit mehreren, in Fig. 14 nicht dargestellten Permanentmagneten fixiert, so dass sich der Rotor 60 zusammen mit der Welle 52 dreht. Der Rotor 60 ist mit einem Freilauf 62 versehen, der in Fig. 14 nicht dargestellte Klemmrollen aufweist. Der Freilauf 62 ist mittels eines weiteren Kugellagers 64 auf der Welle 52 angeordnet und greift mittels der Klemmrollen an dem Rotor 60 an. Ein Zahnrad, das mittels einer Antriebsstange in Drehung versetzt wird, siehe beispielsweise die Fig. 15 bis 17, ist in nicht dargestellter Weise mit dem Freilauf 62 verbunden und dadurch mittels des Kugellagers 64 auf der Welle 52 gelagert. Wird das Zahnrad dann in Drehung versetzt, nimmt es über den Freilauf 62 den Rotor 60 mit. Wenn das Zahnrad stoppt, geben die Klemmrollen des Freilaufs 62 den Rotor 60 frei und dieser kann sich noch weiter drehen.

Der scheibenförmige Rotor 60 ist gegenüber einem Spulensystem 66 angeordnet, das einen Stator des Wandlermoduls 50 bildet und beispielsweise mittels einer relativ zum Gehäuse 56 feststehenden Leiterplatte realisiert ist. Beispielsweise sind mehrere Spulen in nicht dargestellter Weise in eine Kunststoffscheibe eingebettet.

Sowohl der Freilauf 62 mit Klemmrollen als auch die Kugellager 58, 64 sind als Standardkomponenten erhältlich, so dass nicht nur der Wirkungsgrad des Wandlermoduls 50 verbessert wird, sondern auch die Herstellungskosten niedrig gehalten werden können.

Die Darstellung der Fig. 15 zeigt ein Bewegungsmodul 70 für eine erfindungsgemäße Kommunikationseinrichtung. Eine Antriebsstange 72 ist linear verschiebbar zwischen zwei Gehäusewänden 74 oder Lagerböcken gelagert. An ihrem, in Fig. 15 linken Ende ist die Antriebsstange 72 mit einem Druckknopf 76 versehen. Im Bereich ihres, dem Druckknopf 76 gegenüberliegenden Endes ist die Antriebsstange 72 von einer Druckfeder 78 umgeben. Die Druckfeder 78 liegt einerseits an der Gehäusewand 74 und andererseits an einer Anschlagscheibe 80 an, die auf der Antriebsstange 72 fixiert ist. Die Druckfeder 78 spannt die Antriebsstange 72 in ihre in Fig. 15 dargestellte Ausgangsposition vor. Wird also die Antriebsstange 72 durch eine Bewegung des Druckknopfs 76 nach rechts bewegt, wird die Druckfeder 78 zusammengedrückt. Wird der Druckknopf 76 dann losgelassen, bewegt die Druckfeder 78 die Antriebsstange 72 wieder zurück in die in Fig. 15 dargestellte Ausgangsposition. Eine solche Bewegung der Antriebsstange ist in Fig. 15 mittels eines Doppelpfeils 82 dargestellt.

Die Antriebsstange 72 ist mit einer Schneckenwelle 84 versehen und weist somit auf einem Abschnitt ihrer Länge ein Schneckengewinde auf. Diese Schneckenwelle 84 kämmt mit einem als Schneckenrad 86 ausgebildeten Zahnrad. Wird die Antriebsstange 72 also ausgehend von der in Fig. 15 dargestellten Ausgangsposition nach rechts bewegt, wird sich das Schneckenrad 86 durch den Eingriff mit der Schneckenwelle 84 im Uhrzeigersinn drehen. Wird der Druckknopf dann losgelassen, wird die Antriebsstange 72 wieder nach links in die Ausgangsposition bewegt. Das Schneckenrad 86 dreht sich dann entgegen dem Uhrzeigersinn. Diese Hin- und Herbewegung des Schneckenrads 86 ist mittels eines gekrümmten Doppelpfeils 88 symbolisiert.

Das Schneckenrad 86 überträgt seine Rotationsenergie auf ein Wandlermodul, wie es beispielsweise in Fig. 14 dargestellt ist. Das Schneckenrad 86 wäre in diesem Fall mit dem Freilauf 62 der Fig. 14 verbunden. Bei einer Bewegung der Antriebsstange 72 in Fig. 15 nach rechts wird dann über den Freilauf 62 der Rotor 60 des Wandlermoduls 50 mitgenommen. Wenn die Antriebsstange 62 zum Stillstand kommt und dann mittels der Druckfeder 78 wieder zurück in ihre Ausgangsstellung bewegt wird, kann sich der Rotor 60 weiterdrehen und das Wandlermodul 50 kann somit noch weiter elektrische Energie erzeugen.

In nicht dargestellter Weise ist es auch möglich, den Freilauf 62 beispielsweise mit einem umschaltbaren Getriebe zu kombinieren, so dass eine Drehung des Schneckenrads 86 sowohl im Uhrzeigersinn als auch gegen den Uhrzeigersinn immer zu einer gleichgerichteten Drehung des Rotors 60 des Wandlermoduls 50 führt. Auch die Kraft der Druckfeder 78 kann dann für die Erzeugung von elektrischer Energie genutzt werden.

Die Darstellung der Fig. 16 zeigt ein Bewegungsmodul 90 für eine Kommunikationseinrichtung gemäß einer weiteren Ausführungsform der Erfindung. In Bezug auf das Bewegungsmodul 90 werden dabei lediglich diejenigen Elemente erläutert, die sich von dem Bewegungsmodul 70 der Fig. 15 unterscheiden.

Prinzipiell ist die Wirkungsweise des Bewegungsmoduls 90 der Fig. 16 gleich wie die Wirkungsweise des Bewegungsmoduls 70 der Fig. 15. Eine Bewegung der Antriebsstange 72 in den Richtungen des Doppelpfeils 82 führt zu einer Bewegung des Zahnrads in den Richtungen des gekrümmten Doppelpfeils 88. Im Unterschied zu dem Wandlermodul 70 der Fig. 15 ist die Antriebsstange 72 auf einem Abschnitt ihrer Länge mit einem Schraubengewinde 92 versehen. Dieses Schraubengewinde 92 kämmt mit einem Zahnrad 94. Das Zahnrad 94 weist vorzugsweise eine Geradverzahnung auf. Das Schraubengewinde 92 ist kostengünstig herstellbar, beispielsweise auch als Standardteil erhältlich. Auch das geradverzahnte Zahnrad 94 ist als Standardteil erhältlich. Sowohl Schraubengewinde 92 als auch das geradverzahnte Zahnrad 94 lassen sich im Übrigen auch kostengünstig herstellen. Die kinematische Paarung zwischen dem Schraubengewinde 92 und dem geradverzahnten Zahnrad 94 ist nicht optimal, die Kopplung zwischen dem Schraubengewinde 92 und dem Zahnrad 94 lässt sich aber anpassen, so dass der Kontakt zwischen diesen beiden Elementen unter einem Winkel von 90° erfolgen kann. Der Schritt des Schraubengewindes 92 muss auf den Zwischenzahnraum und die Zahnbreite des Zahnrads 94 abgestimmt sein. Ist die Abstimmung einmal erfolgt, kann aber die Fertigung in kostengünstiger Weise erfolgen. Für die Zwecke der erfindungsgemäßen Kommunikationseinrichtung kann die nicht optimale kinematische Paarung zwischen dem Schraubengewinde 92 und dem Zahnrad 94 akzeptiert werden.

Eine Verbesserung der kinematischen Paarung zwischen Schraubengewinde 92 und Zahnrad 94 ist durch Ausbildung des Zahnrads 94 mit Schrägverzahnung möglich.

## Patentansprüche

1. Kommunikationseinrichtung, enthaltend
- eine als Bewegungsmodul (31; 41) ausgebildete Einrichtung zur mechanischen Erzeugung einer Rotationsbewegung, wobei das Bewegungsmodul (31; 41) mit einer Antriebsstange (72) und einer Drucktaste (2) zur Erzeugung einer linearen Bewegung der Antriebsstange (72) sowie mit wenigstens einem Zahnrad versehen ist, das an der Antriebsstange (72) angreift und bei einer linearen Bewegung der Antriebsstange (72) in Rotationsbewegung versetzt wird,
- ein mit dem Bewegungsmodul (31; 41) verbundenes Wandlermodul (32; 42), wobei das Wandlermodul (32; 42) die in dem Bewegungsmodul (31; 41) erzeugte Rotationsbewegung in elektrische Energie umwandelt,
- ein mit dem Wandlermodul (32; 42) verbundenes Energiemanagementmodul (34; 47) zum Bereitstellen von elektrischer Energie gemäß vorgegebenen Randbedingungen ausgehend von der vom Wandlermodul (32; 42) bereitgestellten elektrischen Energie und
- ein Sendemodul (35; 48) zum Senden von Informationen, **dadurch gekennzeichnet, dass** entweder die Antriebsstange (72) wenigstens abschnittsweise als Schneckenwelle (84) ausgebildet ist und das Zahnrad als Schneckenrad (86) ausgebildet ist oder die Antriebsstange (72) wenigstens abschnittsweise mit einem Schraubengewinde (92) versehen ist und das Zahnrad (94) eine Geradverzahnung aufweist.

2. Kommunikationseinrichtung nach Anspruch 1, **dadurch gekennzeichnet, dass** eine Feder (78) vorgesehen ist, um die Drucktaste (76) und/oder die Antriebsstange (72) in eine Ausgangsposition vorzuspannen.

3. Kommunikationseinrichtung nach einem der vorhergehenden Ansprüche, wobei das wenigstens eine Zahnrad des Bewegungsmoduls (31, 41) mit einer Rücklaufsperre und einem Freilauf (6) verbunden ist.

4. Kommunikationseinrichtung nach einem der vorhergehenden Ansprüche, wobei das Bewegungsmodul (31; 41) ein umschaltbares Getriebe aufweist, um eine Bewegung der Antriebsstange in entgegengesetzten Richtungen in eine Rotationsbewegung mit gleicher Drehrichtung umzusetzen.

## Claims

1. Communication device containing
- a device, which is in the form of a movement module (31; 41), for mechanically generating a rotational movement, wherein the movement module (31; 41) is provided with a drive rod (72) and a pushbutton (2) for generating a linear movement of the drive rod (72) and also with at least one gear wheel which acts on the drive rod (72) and, in the event of a linear movement of the drive rod (72), is set in rotational motion,
- a converter module (32; 42) which is connected to the movement module (31; 41), wherein the converter module (32; 42) converts the rotational movement which is generated in the movement module (31; 41) into electrical energy,
- an energy management module (34; 47), which is connected to the converter module (32; 42), for providing electrical energy in line with prespecified boundary conditions based on the electrical energy which is provided by the converter module (32; 42), and
- a transmission module (35; 48) for transmitting information, **characterized in that** either the drive rod (72), at least in sections, is in the form of a worm shaft (84) and the gear wheel is in the form of a worm gear (86) or the drive rod (72), at least in sections, is provided with a screw thread (92) and the gear wheel (94) has a spur toothing system.

2. Communication device according to Claim 1, **characterized in that** a spring (78) is provided in order to prestress the pushbutton (76) and/or the drive rod (72) in a starting position.

3. Communication device according to either of the preceding claims, wherein the at least one gear wheel of the movement module (31; 41) is connected to a non-return device and a freewheel (6).

4. Communication device according to one of the preceding claims, wherein the movement module (31; 41) has a shiftable gear mechanism in order to convert a movement of the drive rod in opposite directions into a rotational movement with the same direction of rotation.

## Revendications

1. Dispositif de communication, comprenant
- un dispositif réalisé sous forme de module de mouvement (31 ; 41) pour générer mécaniquement un mouvement de rotation, le module de mouvement (31 ; 41) étant muni d'une tige de commande (72) et d'un bouton-poussoir (2) pour générer un mouvement linéaire de la tige de commande (72), ainsi que d'au moins d'une roue dentée venant en prise au niveau de la tige de commande (72) et mise en rotation par un mouvement linéaire de la tige de commande (72),
- un module convertisseur (32 ; 42) relié au module de mouvement (31 ; 41), le module convertisseur (32 ; 42) convertissant en énergie électrique le mouvement de rotation généré dans le module de mouvement (31 ; 41),
- un module de gestion d'énergie (34 ; 47) relié au module convertisseur (32 ; 42) pour fournir de l'énergie électrique selon des conditions marginales prédéfinies sur la base de l'énergie électrique fournie par le module convertisseur (32 ; 42), et
- un module d'émission (35 ; 48) pour envoyer des informations,
**caractérisé en ce que** soit la tige de commande (72) est réalisée au moins par endroits sous forme d'arbre de vis sans fin (84) et la roue dentée est réalisée sous forme de roue à vis sans fin (86), soit la tige de commande (72) est munie au moins par endroits d'un filet de vis (92) et la roue dentée (94) présente une denture droite.

2. Dispositif de communication selon la revendication 1, **caractérisé en ce qu'**un ressort (78) est prévu pour précontraindre le bouton-poussoir (76) et/ou la tige de commande (72) dans une position initiale.

3. Dispositif de communication selon l'une quelconque des revendications précédentes, dans lequel ladite au moins une roue dentée du module de mouvement (31 ; 41) est reliée à un dispositif antiretour et à un dispositif en roue libre (6).

4. Dispositif de communication selon l'une quelconque des revendications précédentes, dans lequel le module de mouvement (31 ; 41) présente une transmission commutable afin de transformer un mouvement de la tige de commande dans des directions opposées en un mouvement de rotation d'une même direction de rotation.
